Europäisches Patentamt

European Patent Office

Office européen des brevets

(11) Veröffentlichungsnummer: **0 046 236**
**B1**

(12) **EUROPÄISCHE PATENTSCHRIFT**

(45) Veröffentlichungstag der Patentschrift: **03.04.85**

(51) Int. Cl.⁴: **F 16 C 13/00**

(21) Anmeldenummer: **81106116.7**

(22) Anmeldetag: **05.08.81**

(54) **Bahnleitwalze für hohe Geschwindigkeiten und Verfahren zu ihrer Herstellung.**

(30) Priorität: **16.08.80 DE 3030917**

(43) Veröffentlichungstag der Anmeldung:
**24.02.82 Patentblatt 82/08**

(45) Bekanntmachung des Hinweises auf die
Patenterteilung:
**03.04.85 Patentblatt 85/14**

(84) Benannte Vertragsstaaten:
**BE CH DE FR GB IT LI**

(56) Entgegenhaltungen:
**DE-A-1 474 973**
**DE-A-2 258 610**
**US-A-3 300 286**

(73) Patentinhaber: **AGFA-GEVAERT**
**Aktiengesellschaft**
**D-5090 Leverkusen 1 (DE)**

(72) Erfinder: **Hourticolon, Roland**
**Karl-Huschensstrasse 13**
**D-5653 Leichlingen (DE)**
Erfinder: **Roth, Gerhard**
**Hubert-Drecker-Strasse 10**
**D-5068 Odenthal (DE)**
Erfinder: **Frenken, Hans**
**Am Berg 22**
**D-5068 Odenthal (DE)**
Erfinder: **Schäffer, Helmut**
**Im Hederichsfeld 58**
**D-5090 Leverkusen 3 (DE)**
Erfinder: **Koepke, Günther, Dr.**
**Am Hahnenberg 41**
**D-5068 Odenthal (DE)**

Courier Press, Leamington Spa, England.

**Beschreibung**

Die Erfindung betrifft eine Bahnleitwalze für hohe Geschwindigkeiten einer zu bewegenden Bahn mit an der Oberfläche der Bahnleitwalze angeordneten Vertiefungen zur Aufnahme der von der bewegten Bahn mitgeführten Luft und ein Verfahren zur Herstellung von Bahnleitwalzen für hohe Geschwindigkeiten.

In Bearbeitungsmaschinen und -anlagen für Bahnen aus Papier, Filmen oder Folien werden die Bahnen oft um eine Vielzahl angetriebener oder frei drehender Walzen geführt. Oft ist hierbei nur ein geringer Umschlingungswinkel der Bahn um die Walzen und nur geringe Spannung in der Bahn erwünscht.

Um Beschädigungen der oft empfindlichen Bahnoberfläche, zum Beispiel bei beschichteten photographischen Papieren und Filmen, zu vermeiden, muß gewährleistet sein, daß die Bahn ohne Schlupf, das heißt ohne Relativbewegung zur Walze über die Walzen geführt wird. Antreibende Walzen müssen so beschaffen sein, daß die Bahnoberfläche schlupflos von der Walze transportiert und angetrieben wird. Die leerlaufenden zur Führung der Bahn verwendeten Walzen müssen von der bewegten Bahn angetrieben werden. Ein Schlupf zwischen Walze und Bahn führt selbst dann zu Kratzern und Aufscheuern der Bahnoberfläche, wenn die Walzenoberflächen hochglanzpoliert sind.

Es ist auch allgemein bekannt, daß bewegte Bahnen je nach ihrer Oberflächenbeschaffenheit und Geschwindigkeit an ihren Grenzschichten mehr oder weniger Luft mit sich führen. Bei geringer Umschlingung der Walze durch die Bahn treten schon ab einer Bahngeschwindigkeit von etwa 90 m/min Schwierigkeiten insofern auf, als sich die von der Bahn mitgerissene Luft vor den Walzen staut, sich die Bahn von der Walze abhebt und zeitweise solange auf einem Luftkissen über die Walze gleitet bis sich der Druck vor der Walze abgebaut hat. Die Mitnahmekräfte die von der Bahn auf die Walze oder von der Walze auf die Bahn übertragen werden sind dann sehr klein oder gleich Null.

Die nicht angetriebenen Walzen bleiben stehen, oder drehen sich mit erheblich verminderter Geschwindigkeit. Auf den angetriebenen Walzen schwimmt die Bahn. Dies führt zu einem instabilem Bahnlauf. Die Bahn verläuft seitlich und es erfolgen Verkratzungen der Bahn, wenn die Bahn die mit geringerer oder größerer Geschwindigkeit drehende Walze zeitweise berührt.

Eine Bearbeitung von empfindlichen Bahnen, die mit hohen Geschwindigkeiten bewegt werden, ist nicht mehr möglich, wenn die Geschwindigkeit der Bahn 100 m/min überschreitet, nur geringe Umschlingungswinkel der Bahn um die Walze und geringer Bahnzug erlaubt sind.

Aus der US—A—3 405 855 ist es bekannt, zur Lösung dieses Problems zylindrische Walzen zu verwenden, die auf ihrem Umfang mit einer Vielzahl radial um den Umfang verlaufender Rillen versehen sind. Während die Bahn auf der verbleibenden Oberfläche der Walze fest aufliegt, strömt die von der Bahn an ihrer Grenzschicht mitgeführte Luft durch die Rillen an der Unterseite der Bahn entlang und kann auf der gegenüberliegenden Walzenseite die Rillen wieder verlassen. Etwa 10—40% der Walzenoberfläche besteht aus 0,5 bis 2,4 mm tiefen und 0,5—2,3 mm breiten Rillen, die in einem Abstand von 5 bis 15 mm voneinander angeordnet sind.

Diese Walzen sind naturgemäß sehr teuer in der Herstellung, da eine Vielzahl von Rillen (200—700 Rillen/m) in die Oberfläche der Walze eingearbeitet werden müßen. Um Abdrücke der Rillen auf der Walze auf die Bahn zur vermeiden, müssen die Kanten der Rillen abgerundet, geschliffen und poliert werden. In einer Trockenstrecke für photographische Materialien werden zum Beispiel bis zu 1000 derartige Walzen benötigt und bei den hochempfindlichen photographischen Emulsionen können immer noch Abdrücke der Rillenkanten auf den photographischen Bahnen als Druckbelichtungen auftreten.

Aus der US—A—3 300 286 ist eine Bahnumlenkwalze bekannt, die beim Extrudierbeschichten verbesserte Ergebnisse ermöglicht. Die Walzenoberfläche wird hierzu durch Sandstrahlen aufgerauht, geschliffen, verchromt und die Oberfläche danach nochmals geschliffen und in vier Richtungen poliert. Auf der Walzenoberfläche entsteht hierbei eine Vielzahl von kleinen näpfchenartigen Vertiefungen, in denen die von der Bahn mitgeführte Luft unter hohem Druck eingeschlossen wird.

Die komprimierte Luft verhindert das Eindringen der plastischen Extrusionsmasse in die Vertiefungen während der Umschlingung der Walze und drückt die Bahn mit der Beschichtung von der Walze ab, wenn die gewünschte Umschlingung beendet ist.

Nach der DE—A—2 258 610 wird das Verfahren der US—Patentschrift dadurch vereinfacht, daß die bereits verchromte Walzenoberfläche gesandstrahlt und geschliffen wird, wobei die gleichen Ergebnisse erhalten werden.

Die nach den beiden Verfahren hergestellten Bahnumleitwalzen haben die spezielle Eigenschaft Luft komprimiert aufzunehmen und mit der komprimierten Luftpolster zu erzeugen, welches die Haftung der Bahn auf der Walze vermindert. Derartige Walzen sind daher als Bahnleitwalzen für hohe Geschwindigkeiten, bei denen gerade eine gute Haftung ohne Luftpolster zwischen Bahn und Walze angestrebt wird, nicht geeignet.

Der Erfindung liegt daher die Aufgabe zugrunde ein preiswertes Verfahren zur Herstellung von Bahnleitwalzen und Bahnleitwalzen der eingangs genannten Art zu schaffen, mit denen es möglich ist, Bahnen bei hohen Geschwindigkeiten ohne Beschädigungen zu leiten und umzulenken.

Diese Aufgabe wird für ein Bahnleitwalze der einleitend genannten Ausbildung erfindungsgemäß durch ein Verfahren zur Herstellung dadurch gelöst, daß eine Bahnleitwalze so geschliffen und poliert wird, daß auf 60 bis 70% der Oberfläche von der Bahnleitwalze ein fein gefächertes Netz von Vertiefungen verbleibt, deren mittlere Tiefen 30 bis 80 µm betragen und 30 bis 40% der Oberfläche zur Führung und Umleitung der Bahn eine glattpolierte zylindrische Walzenoberfläche ergeben.

Durch dieses Verfahren lassen sich überraschenderweise Bahnleitwalzen sehr einfach und preiswert herstellen. Es ist bekannt, daß sich Aluminiumrohre oder daraus gefertigte Walzen dann ohne galvanische Vorbehandlung haltbar verchromen lassen, wenn die zu verchromende Oberfläche vorher gesandstrahlt wurde. Je nach Körnung und Geschwindigkeit des auf die Aluminiumoberfläche aufprallenden Sandes kann eine mehr oder weniger rauhe Oberfläche erzeugt und anschließend verchromt werden. Die Oberfläche wird in einfacher Weise nur so lange geschliffen bis ein gewünschter Anteil glatter tafelbergartiger Flächen vorhanden ist, während die verbleibende ungeschliffene Fläche ein fein gefächertes Netz von Kompressionsräumen für die von der schnell bewegten Bahn mitgeführte Luft bildet.

Die Oberflächengüte der die Bahn tragenden tafelbergartigen Flächen hängt von der Feinheit des Schleif- und Poliermateriales ab und die Tiefe der Täler in den fein gefächertem Netz von Kompressionsräumen wird durch das verwendete Strahlgut und die Schleifintensität beeinflußt.

Die Aufgabe wird bei einer Bahnleitwalze der einleitend genannten Ausbildung gemäß der Erfindung dadurch gelöst, daß auf 60 bis 70% der Oberfläche der Bahnleitwalze ein fein gefächertes Netz von Vertiefungen angeordnet ist, deren mittlere Tiefen 30 bis 80 µm betragen und in denen während der Umschlingung der Bahnleitwalze durch die Bahn die von der Bahn an ihrer Grenzschicht mitgeführte Luft aufgenommen wird und daß auf 30 bis 40% der Oberfläche der Bahnleitwalze tafelbergartige glattgeschliffene und polierte Flächen den Vertiefungen benachbart sind, auf denen die Bahn aufliegt.

Es war für den Fachmann nicht vorauszusehen, daß derartig feine Vertiefungen oder Kompressionsräume bereits ausreichen, um die von der Bahn an ihrer Grenzschicht mitgeführte Luft während der Umschlingung der Walze durch die Bahn aufzunehmen. Ebenso überraschend war, daß bereits eine geringe Verdichtung der Luft in den Kompressionsräumen und ein Abführen der Luft in Kanälen ein Abheben der Bahn von der Bahnleitwalze selbst bei hohen Bahngeschwindigkeiten verhindern konnte.

Die tafelbergartigen glattpolierten Flächen am Umfang der Bahnleitwalze tragen die Bahn bei der Umlenkung ohne irgendwelche Abdrücke der Kanten auch auf hochempfindlichen Bahnoberflächen zu erzeugen. Dies wird wohl dadurch erreicht, daß die verdichtete Luft in den Kompressionsräumen die auf der Bahnleitwalze aufliegende Bahn an den Kanten der tafelbergartigen Flächen unterstützt und eine Einziehen der Bahn in die Vertiefungen verhindert.

Vorteilhafterweise besteht die Bahnleitwalze aus Aluminium, welches an seiner Oberfläche gesandstrahlt und ohne galvanische Zwischenbehandlung verchromt und so geschliffen ist, daß ein feingefächertes Netz von Kompressionsräumen verblieben ist.

Natürlich ist die Erfindung nicht auf Aluminium als Werkstoff beschränkt, sondern es eignen sich auch andere Materialien und Metalle zur Herstellung der Bahnleitwalzen. Vorzugsweise werden aber leichte Werkstoffe zur Herstellung von Bahnleitwalzen für hohe Geschwindigkeiten gewählt, um eine geringe zu beschleunigende oder abzubremsende Walzenmasse zu erhalten. Um elektrostatische Aufladungen von der Bahn abzuführen werden metallische Walzen bevorzugt. Verchromte Walzen zeichnen sich durch eine besondere Oberflächenhärte und einer damit verbundenen Abriebfestigkeit aus.

Es zeigt sich weiterhin von Vorteil, wenn die Bahnleitwalze an ihrem Umfang zur Erzeugung der tafelbergartigen glatten Flächen so geschliffen und poliert ist, daß die Rauhtiefe der Oberfläche weniger als 3 µm, vorzugsweise weniger als 1 µm beträgt.

Eine Rauhtiefe von weniger als 3 µm bzw. 1 µm gibt der Bahnleitwalze eine tragende Oberfläche, die sehr glatt ist und der Bahn eine satte Auflage gestattet. Außerdem ist eine deratige Bahnleitwalze leicht zu reinigen.

Der Staudruck der mitgeführten Luft vor der Bahnleitwalze ist von der Bahngeschwindigkeit und der Beschaffenheit der Bahnoberfläche abhängig. Eine rauhe oder geprägte Bahnoberfläche fördert an ihrer Grenzschicht mehr Luft als eine glatte Bahn. Ebenso fördert eine Bahn die mit hoher Geschwindigkeit bewegt wird mehr Luft und erhöht den Staudruck vor der Bahnleitwalze mehr als eine langsamer bewegte Bahn.

Es zeigt sich in der Praxis, daß die beschriebene Bahnleitwalze überraschenderweise den Erfordernissen in weitgehendem Umfang angepaßt werden können. Ist eine Bahnleitwalze für die höchste gewünschte Geschwindigkeit der bewegten Bahn und deren größte Oberflächenrauigkeit ausgelegt, so ist die Bahnleitwalze ohne Nachteile für alle darunterliegenden Werte ebenfalls einsetzbar.

Die Erfindung wird nachfolgend anhand der Zeichnungen näher erläutert. Es zeigt:

Figur 1 Bahnleitwalzen in einer Flachtrockenstrecke

Figur 2 Bahnleitwalzen in einer Trockenstrecke mit Walzenhohlsaugeinrichtungen

Figur 3 einen vergrößerten Schnitt durch eine Bahnleitwalzenoberfläche mit aufliegender Bahn Figur 4 eine vergrößerte Aufsicht auf eine Bahnleitwalze.

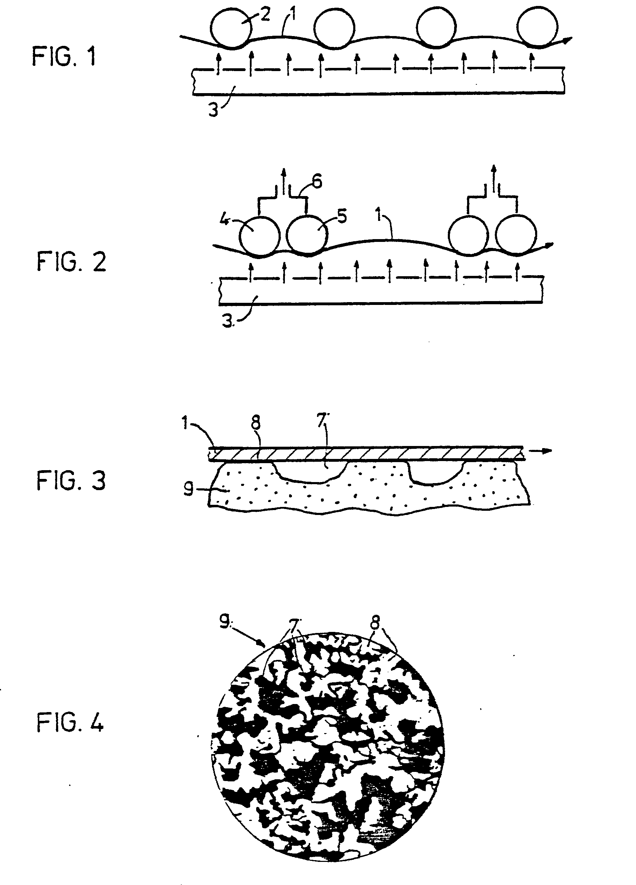

In Figur 1 sind Bahnleitwalzen 2 dargestellt, die von einer Bahn 1 je nach Bahnzug mit einem Umschlingungswinkel von 2—8° umschlungen werden. Die Bahn 1 wird von einem Luftstrom aus einem Flachtrockner 3 (siehe Pfeile) an die Bahnleitwalzen 2 angedrückt. Bei der Verwendung üblicher Bahnleitwalzen bildet sich vor jeder Bahnleitwalze 2 ein Luftstau, der die Bahn 1 von den Bahnleitwalzen 2 abhebt, sodaß die leerlaufende Bahnleitwalzen 2 dann keinen Antrieb mehr besitzen. Die Bahn 1 gleitet um die Bahnleitwalzen 2 auf einem Luftkissen solange bis der Luftstau abgebaut ist. Dies führt zu einem instabilen Bahnlauf und damit oft zu einem seitlichen Bahnverlaufen. Inzwischen haben die leerlaufenden Bahnleitwalzen 2 ihre Umfangsgeschwindigkeit durch Reibung in ihren Lagern reduziert und müssen durch die Bahn 1 erneut beschleunigt werden. Die Bahn 1 rutscht hierbei auf den Bahnleitwalzen 2 und wird an ihrer Oberfläche beschädigt.

In Figur 2 wird eine Bahm 1 ebenfalls durch aus einem Flachtrockner 3 ausströmende Luft (siehe Pfeile) gegen Bahnleitwalzen 4,5 geblasen. Gleichzeitig wird die Bahn 1 durch Unterdruck in den Walzenhohlsaugern 6 in die Zwickel zwischen die zwei dicht benachbarten Walzen 4 und 5 eingesaugt und so der Umschlingungswinkel der Bahn 1 um die Bahnleitwalzen vergrößert.

Bei der Verwendung üblicher Bahnleitwalzen in den Walzenhohlsaugern 6 und bei höheren Bahngeschwindigkeiten, etwa über 100 m/min, bildet sich vor der Bahnleitwalze 4 ebenfalls ein Luftstau der die Bahn 1 von der ersten Bahnleitwalze 4 abhebt und den Antrieb der Walze 4 vermindert. Die Bahnleitwalzen 5 werden von der Bahn weiterhin umschlungen, da die Luft auf der Bahn durch den anliegenden Unterdruck zwischen den Walzen 4 und 5 abgesaugt wird. Ein instabiler Bahnlauf wird mit der Einrichtung gemäß Figur 2 zwar vermieden, jedoch wird die Bahnoberfläche durch die zeitweilig mit reduzierter Geschwindigkeit leerlaufenden Bahnleitwalzen 4 beschädigt.

Sind die Bahnleitwalzen 9, wie oben beschrieben, an ihren Oberflächen mit einem fein gefächerten Netz von Kompressionsräumen 7 versehen, wie in den Figuren 3 und 4 dargestellt, so wird die von der Grenzfläche der Bahn 1 mitgeführte Luft auf der Auflaufseite der Bahn 1 auf die Bahnleitwalze 9 in den Kompressionsräumen 7 verdichter, mit umgelenkt und strömt auf der Ablaufseite der Bahn 1 von der Bahnleitwalze 9 wieder aus. Die Bahn 1 liegt während der Umlenkung fest an den tafelbergartigen, glattgeschliffenen und polierten Flächen 8 rund um die Kompressionsräume 7 auf. In Figur 3 ist ein Schnitt in radialer Richtung durch die Oberfläche einer Bahnleitwalze 9 dargestellt. In starker Vergrößerung werden die Kompressionsräume 7 und die tafelbergartigen Erhebungen 8 gezeigt auf denen die Bahn 1 aufliegt. In Figur 4 ist eine Aufsicht auf einem kleinen Ausschnitt auf die Oberfläche einer Bahnleitwalze 9 gezeigt und es sind das feingefächerte Netz von Kompressionsräumen 7 (punktierte Flächen) und die geschliffenen tafelbergartigen Flächen 8 dargestellt.

Die Fertigung der beschriebenen Bahnleitwalzen ist relativ einfach und kostet nicht mehr als die Herstellung verchromter Metallwalzen. Die Herstellung und die Erprobung der beschriebenen Bahnleitwalzen soll an einem Beispiel erläutert werden.

Beispiel Es wurden Aluminiumrohre mit einem Außendurchmesser von 70 mm, einer Wandstärke von 5 mm und einer Länge von 1780 mm gestrahlt. Zum Strahlen wurden Glasperlen mit einem Durchmesser von 600—800 µm mit einem Druck von 5 bar gegen die Oberfläche der Aluminiumrohre gestrahlt. Die Drehzahl der gestrahlten Walzen betrug 35 U/min bei einem Verschub von 150 mm/min. Es erfolgten zwei Strahldurchgänge. Die Rohre wurden in einem Chrombad aufgechromt und eine Schichtdicke von 50—70 µm Chrom erzielt.

Die verchromten Rohre wurden auf einer Feinschleifmaschine geschliffen bis 40% der Oberfläche einen Schliff zeigte. Als dann wurden die geschliffenen Oberflächen der Rohre mit 220 Korn auf eine Rauhtiefe von 1 µm poliert, beidseitig Kugellager eingesetzt und die rohrförmigen Bahnleitwalzen ausgewuchtet in einer Flachtrockenstrecke nach Figur 1 auf Wellen gelagert. Die Bahnleitwalzen wurden 3 Monate unter Betriebsbedingungen getestet, wobei die Bahngeschwindigkeit 380 m/min, der Umschlingungswinkel der Bahnleitwalze durch die Bahn 1,5° und der Bahnzug 15 kg/m Bahnbreite betrug.

Die Bahnleitwalzen genügten den gestellten Anforderungen in jeder Hinsicht. Es trat keinerlei Relativbewegung zwischen der Bahn und den Bahnleitwalzen auf. Die Bahn zeigte keine Instabilität und seitliches Verlaufen. Die Bahnleitwalzen verursachen keine Verkratzungen der empfindlichen Bahnoberfläche und riefen keine Druckbelichtungen auf photographischen Filmbahnen hervor. Die Bahnleitwalzen zeigten keine wesentlichen Verschmutzungen und waren leicht zu reinigen.

Es konnte eine einfache Flachtrockenstrecke nach Figur 1 verwendet werden, anstatt der aufwendigen Einrichtung nach Figur 2 mit Walzenhohlsaugern, da die Bahn fest an allen Leitwalzen anlag.

**Patentansprüche**

1. Verfahren zur Herstellung von Bahnleitwalzen für hohe Geschwindigkeiten einer zu bewegenden Bahn mit an der Oberfläche der Bahnleitwalze angeordneten Vertiefungen zur Aufnahme der von der bewegten Bahn mitgeführten Luft, wobei die Bahnleitwalze aus einem Metallrohr hergestellt wird, welches an seiner Oberfläche gesandstrahlt, anschließend verchromt, geschliffen und poliert wird, dadurch gekennzeichnet, daß das Schleifen und Polieren so erfolgt, daß auf 60 bis 70% der Oberfläche der Bahnleitwalze (9) ein fein gefächertes Netz von Vertiefungen (7) verbleibt, deren mittlere Tiefen 30 bis 80 µm betragen und 30 bis 40% der Oberfläche zur Führung und Umleitung der Bahn (1) eine glattpolierte zylindrische Walzenoberfläche (8) ergeben.

2. Bahnleitwalze für hohe Geschwindigkeiten einer zu bewegenden Bahn mit an der Oberfläche der Bahnleitwalze angeordneten Vertiefungen zur Aufnahme der von der Bahn mitgeführten Luft, dadurch gekennzeichnet, daß auf 60 bis 70% der Oberfläche der Bahnleitwalze (9) ein fein gefächertes Netz von Vertiefungen (7) angeordnet ist, deren mittlere Tiefen 30 bis 80 µm betragen und in denen während der Umschlingung der Bahnleitwalze (9) durch die Bahn (1) die non der Bahn (1) an ihrer Grenzschicht mitgeführte Luft aufgenommen wird und daß auf 30 bis 40% der Oberfläche der Bahnleitwalze tafelbergartige glattgeschliffene und polierte Flächen (8) den Vertiefungen (7) benachbart sind, auf denen die Bahn (1) aufliegt.

3. Bahnleitwalze nach Anspruch 2, dadurch gekennzeichnet, daß die Bahnleitwalze (9) aus Aluminium besteht, welches an seiner Oberfläche gesandstrahlt, verschromt und so geschliffen ist, daß ein fein gefächertes Netz von Kompressionsräumen (7) verblieben ist.

4. Bahnleitwalze nach Anspruch 2, dadurch gekennzeichnet, daß die Bahnleitwalze (9) an ihrem Umfang zur Erzeugung der tafelbergartigen glatten Flächen (8) so geschliffen und poliert ist, daß die Rauhtiefe der Oberfläche weniger als 3 µm, vorzugsweise weniger als 1 µm beträgt.

**Revendications**

1. Procédé pour fabriquer des cylindres de guidage de bande permettant à une bande de se déplacer à des vitesses élevées et comprenant des renfoncements disposés à la surface du cylindre pour absorber l'air entraîné par la bande en mouvement, le cylindre de guidage de bande étant fabriqué à partir d'un tube métallique qui, à sa surface, est traité par jet de sable, ensuite est chromé, meulé et poli, procédé caractérisé en ce que le melage et le polissage ont lieu de manière que sur 60 à 70% de la surface du cylindre de guidage de bande (9), demeure un réseau finement compartimenté en éventail de renfoncements (7) dont les profondeurs moyennes vont de 30 à 80 µm et que 30 à 40% de la surface soient sous la forme d'une surface de cylindre (8) cylindrique polie et lisse pour guider et dévier la bande (1).

2. Cylindre de guidage de bande permettant de déplacer une bande à des vitesses élevées et comprenant des renfoncements disposés à la surface du cylindre pour absorber l'air entraîné par la bande, caractérisé en ce qu'on dispose sur 60 à 70% de la surface du cylindre de guidage de bande (9), un réseau finement compartimenté en éventail de renfoncements (7) dont les profondeurs moyennes vont de 30 à 80 µm et dans lesquels est absorbé l'air entraîné par la bande (1) sur sa couche limite pendant l'enroulement de la bande (1) autour du cylindre (9) et en ce que, sur 30 à 40% de la surface du cylindre de guidage de bande, des faces (8) du type montagne à plateau adoucies à la meule et polies sur lesquelles repose la bande (1) sont voisines des renfoncements (7).

3. Cylindre de guidage de bande selon la revendication 2, caractérisé en ce que le cylindre (9) est constitué d'aluminium qui, à sa surface, est traité au jet de sable, chromé et meulé de telle manière que demeure un réseau finement compartimenté en éventail d'espaces de compression (7).

4. Cylindre de guidage de bande selon la la revendication 2, caractérisé en ce que le cylindre (9) est meulé et poli de telle manière, sur sa périphérie pour produire les faces (8) lisses du type montagne à plateau, que la profondeur des irrégularités de la surface est inférieure à 3 µm, de préférence inférieure à 1 µm.

**Claims**

1. Process for the production of web guide rollers for a web which is required to be moved at high speeds, having depressions arranged on the surface of the web guide roller for receiving the air carried with the moving web, the web guide roller being produced from a metal tube, the surface of which is sand blasted, subsequently chrome-plated, ground and polished, characerised in that the grinding and polishing are carried out in such a manner that a finely branched network of depressions (7) is left over 60 to 70% of the surface of the web guide roller (9), of which depressions the average depths are 30 to 80 µm and 30 to 40% of the surface form a smoothly polished cylindrical roller surface (8) for supporting and deflecting the web (1).

2. Web guide roller for a web which is required to be moved at high speeds, having depressions arranged on the surface of the web guide roller for receiving the air carried with the web, characterised in that a finely branched network of depressions (7) is arranged over 60 to 70% of the surface of the web guide roller (9), of which depressions the average depths are 30 to 80 µm and in which depressions the air carried in the boundary layer of the web (1) while the web (1) is in contact with the web guide roller (9) is received, and in that over 30 to 40% of the surface of the web guide roller plateau-like, smoothly ground and polished areas (8) are adjacent to the depressions (7), on which areas the web (1) rests.

3. Web guide roller according to Claim 2, characterised in that the web guide roller (9) consists of aluminium, the surface of which is sand blasted, chrome-plated and ground in such a manner that a finely branched network of compression chambers (7) remains.

4. Web guide roller according to Claim 2, characterised in that in order to produce the plateau-like smooth areas (8) the circumference of the web guide roller (9) is ground and polished in such a manner that the peak-to-valley height of the surface is less than 3 µm, preferably less than 1 µm.

FIG. 1

FIG. 2

FIG. 3

FIG. 4